# EUROPEAN PATENT APPLICATION

(11) **EP 0 611 689 A1**
(43) Date of publication of application: **24.08.1994**
(21) Application number: 94500018.0
(22) Date of filing: 07.02.1994
(51) Int. Cl.: B62B 7/08

(54) **A device for locking and releasing the folded position of children's pushchairs**

(30) Priority: 18.02.1993 ES 9300488; 10.11.1993 ES 9302343
(71) Applicant: JANE S.A., E-08184 Palau de Plegamans (Barcelona) (ES)
(72) Inventor: Jane Cabagnero, Ramon, c/o JANE, S.A., E-08184 Palau de Plegamans (Barcelona) (ES)
(74) Representative: Pastells Teixido, Manuel

(57) **Abstract**

The puschair is folded transversely, with the intermediate U-shaped portion (2) of the handlebar formed by two hinged portions and comprising a latch (48) locking it in the unfolded position thereof. The puschair is characterized in that the handlebar is formed by two rigid L-shaped members (2 and 3), the shorter arms of which are hingedly connected together (6), forming the intermediate portion of the handlebar, while the longer arms of said L-shaped members form the side limbs (4 and 5) of the handlebar, with the peculiarity that said side limbs are each formed by two mutually coaxially rotatable portions (4'), one of said portions, fixedly attached to the shorter arm, is provided with a spigot (105) on which the puschair unfolding locking latch (56) is hooked, said latch being mounted on each front leg (8 and 9) of the chair and on which the corresponding handlebar side limb (4 and 5) may slide.

## Description

The invention relates to a device for locking and releasing the folded position of children's pushchairs.

This device is appropriate for children's pushchairs which fold transversally and when being folded the U-shaped handlebar slides over the front legs of the pushchair.

Such pushchairs have the intermediate portion of the handlebar hinged in the middle, where there is a latch locking them in the unfolded state thereof. Between the side limbs of the handlebar and the front legs there are respective latches locking the pushchair in the unfolded state thereof.

The present applicants are owners of ES-A-9200976 relating to a folding chassis for children's pushchairs, which is folded as indicated above.

When the pushchairs of this type have to be folded by the person out with the child, certain difficulties are encountered in that three latches have to be operated, namely the handlebar latch and the latches on each side of the chassis and generally only one hand is free, since the child has to be held with the other hand.

The present device has been devised to simplify the operation of releasing the pushchair latches, whereby by performing a single operation on the handlebar latch, both this and the side latches are released.

With a view to ensuring that the unfolded position of the pushchair does not become unsafe as a result of the elimination of the direct releasing controls for the side latches, according to the invention the handlebar joint has been provided with a safety device which may be manually released in the same operation as in which the latch is released.

It is a feature that the handlebar is formed by two L-shaped members, the shorter arms of which are hingedly connected together, forming the intermediate portion of the handlebar, while the longer arms form the side limbs of the handlebar, with the peculiarity that said side limbs are formed by two mutually coaxially rotatable portions, one of which, fixedly attached to the shorter arm, is provided with a spigot on which the pushchair folding locking latch is hooked, the latch being mounted on the front legs of the chair.

A further feature is that the handlebar joint, which is provided with a latch having a pushbutton which releases the handlebar on being depressed, in the position thereof corresponding to the unfolded state of the handlebar, is retained by a resilient safety device having a control for manual operation and allowing the said joint to be released.

With this device, when the two shorter arms of the intermediate portion of the handlebar rotate about the axis of the joint thereof, the portion of the side limbs of the handlebar fixedly attached to said shorter arms is caused to rotate coaxially and therewith the spigots of said side limbs are released from the latches mounted on the front legs, allowing the handlebar side limbs to slide over the front legs to achieve total folding of the pushchair.

In a further embodiment, the latch with control pushbutton is replaced by another latch of like characteristics to those of the safety device, with the latch and safety device acting by sliding in opposite directions, urged by respective springs, the latch and safety device having respective bolts which are inserted in corresponding bolt eyes of the ends of the hinged division of the handlebar intermediate portion.

The handlebar is split at the intermediate portion thereof and respective mutually hinged bushings are inserted in the facing ends thereof, with this area being notably reinforced.

These and other features will be better gathered from the following detailed description, to facilitate which there are attached four sheets of drawings in which two embodiments given only as a non-limiting example of the scope of the invention are illustrated.

### In the drawings:

Figure 1 is an elevation view of the intermediate portion of the handlebar, in the unfolded state of the pushchair;
Figure 2 is an elevation view of a detail of the construction of the handlebar safety device;
Figure 3 is a rear elevation view of the safety device;
Figure 4 is a side elevation view of a detail of the composition, with coaxial rotation, of the handlebar side limbs, with the latch mounted to the front legs;
Figure 5 is a plan view of a detail of the front leg latch;
Figure 6 is an elevation view of the start of the handlebar folding operation, with the release of the latches mounted on the front legs;
Figures 7 and 8 are elevation views of the handlebar intermediate portion in the unfolded state of the pushchair and at the start of the folding operation of the handlebar, with release of the latches mounted on the front legs, respectively, according to a second embodiment;
Figure 9 is a plan view of the intermediate portion of the handlebar in the unfolded position, according to the second embodiment; and
Figure 10 is a longitudinal section in detail of the handlebar latch and safety device construction, of the second embodiment.

In accordance with the drawings, the device of the invention is provided on the U-shaped handlebar 1 of the pushchair. The handlebar is formed by two L-shaped members 2 and 3 which are hingedly connected together at the shorter arms thereof by a crosspin 6 and form the intermediate portion of the handlebar constituting the grip thereof, while the longer arms of the L-shaped members form the side limbs 4 and 5 of the handlebar.

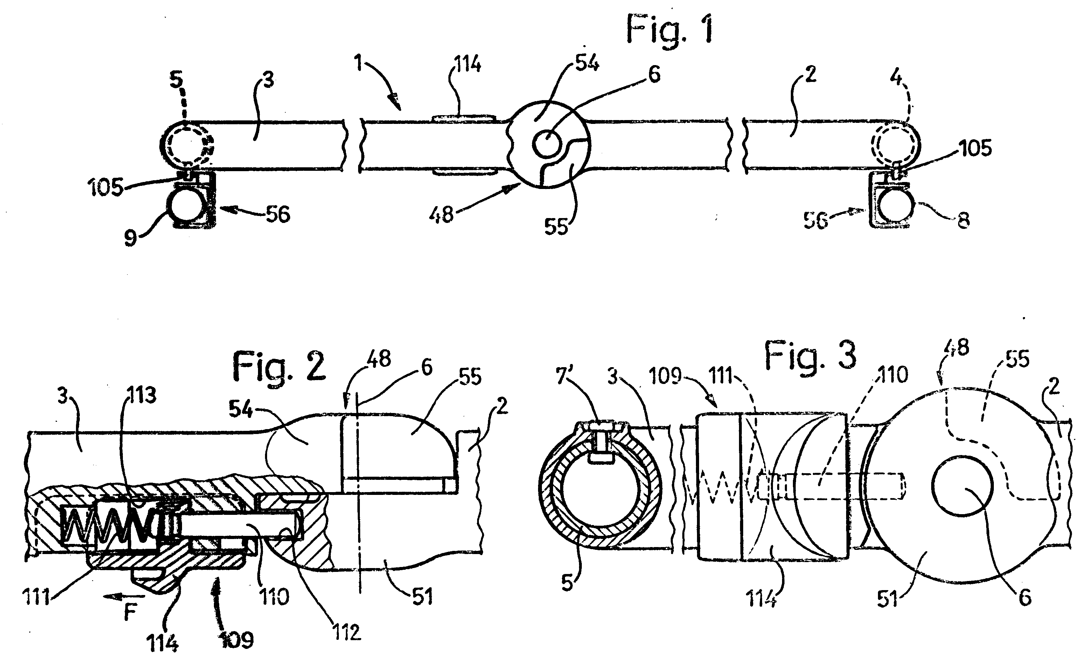

The shorter arms of the L-shaped members 2 and 3 are formed by respective tubular members of plastics material. The upper ends of the longer metal arms 4 and 5 are inserted and retained in the bent ends of the shorter arms by a rivet 7' (Figure 3), to strengthen the L-shaped members.

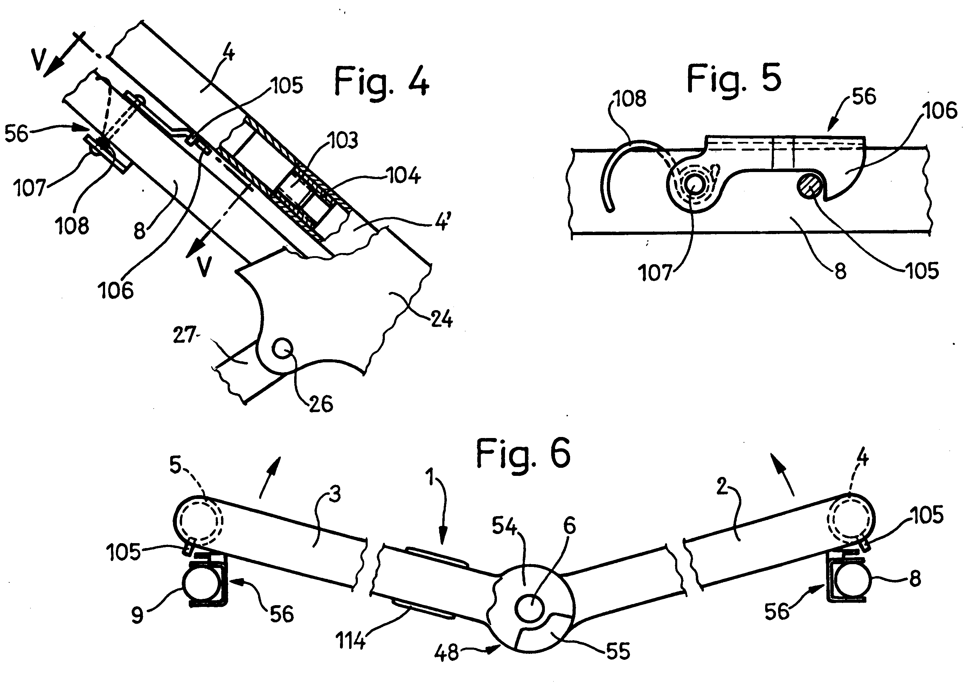

The handlebar is slidingly mounted by its side limbs above the front legs 8 and 9, and the lower portions of the side limbs 4 and 5 are split, forming end portions 4' (Figure 4) fixedly attached to the guide brackets 24 on which the front legs slide. At the guide brackets, the handlebar is hingedly connected by way of a pivot pin 26 with the upper end of the corresponding rear legs 27.

The handlebar side limbs 4 and 5 may rotate coaxially relative to the end portions 4' thereof. To this end, the coupling between such may be made, for example, with a threaded pin 103 fixedly attached to the side limbs 4 and 5 and threaded in a threaded bushing 104 fixedly attached to said portions 4'.

Said handlebar side limbs 4 and 5 are provided on the lower side thereof with a spigot 105 (Figure 4) where the pushchair unfolding locking latch 56 is engaged. This latch is mounted on the front legs 8 and 9 and is formed by a hook 106 formed in a U-shaped member hingedly mounted on a pin 107 to the upper portion of the front legs. Said hook engages the spigot 105, against which it is urged by a helical spring 108 mounted around the pin 107 and bearing at the ends thereof respectively against the front leg and the U-shaped member forming the hook 106.

The joint at the handlebar centre shaft 6 comprises a latch 48 locking the unfolded position thereof. The latch is mounted in the interior of a disc-shaped widening 51 of the short end of the L-shaped member 2 of the handlebar, and in the interior of another disc-shaped widening 54 of the short end of the other L-shaped member 3 of the handlebar. In this widening there is an external pushbutton 55 which, when pressed, allows free rotation of the two overlaid widenings 51 and 54 (Figure 6) around the crosspin 6 passing through the centre thereof.

The unfolded position of the handlebar (Figure 1) is locked, further to the action of the latch 48, by a safety device 109 formed by a bolt 110 (Figure 2) urged at one end by a spring 111 and penetrating at the other end in a bolt eye 112 formed in the disc-shaped widening 51, preventing it from rotating relative to the disc-shaped widening 54 of the handlebar member 3, where said bolt 110 is mounted in a cavity 113 of said member.

The bolt is fixedly attached to an external control 114 of semi-circular section which slides on the rear portion of the short end of the handlebar member 3.

When the safety member is moved in the direction of the arrow F (Figure 2), the widening 51 is released relative to the bolt 110 and when the pushbutton 55 is pressed, the latch 48 will be released, the two shorter arms of the L-shaped members 2 and 3 forming the handlebar hand grip will be able to rotate relative to one another. This angular rotation (Figure 6) will cause the coaxial rotation of the handlebar side limbs 4 and 5 fixedly attached to said shorter arms and, therewith, the release of the spigots 105 of said side limbs from the locking latches 56 mounted on the front legs, allowing the complete folding of the pushchair.

The safety member locking the handlebar joint may also be mounted on the latch 46 itself, to lock it against accidental operation of the pushbutton thereof.

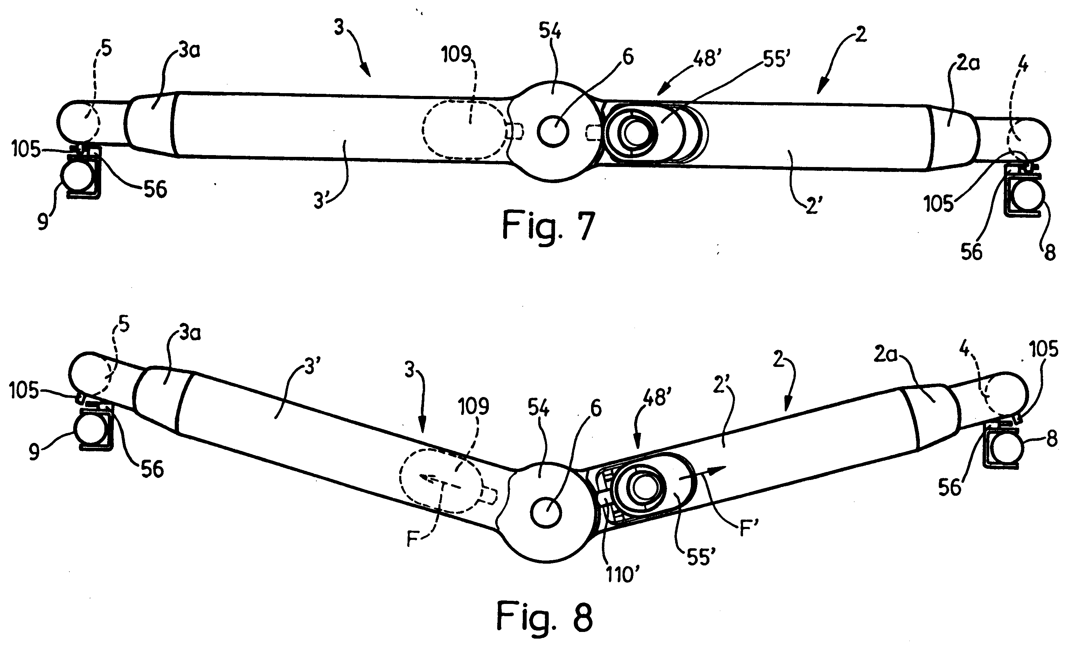

As shown in Figures 7 to 10, the handlebar is formed by two L-shaped members 2 and 3, at the opposed ends thereof there are coupled together respective sleeves 2' and 3', hingedly connected together about a crosspin 6 and forming the handlebar hand grip, while the other arms of these L-shaped members form the side limbs 4 and 5 thereof.

The sleeves 2' and 3' are made of plastic and are attached to the ends of the L-shaped members 2 and 3 by respective rivets 7'', respective terminations formed by bushings 3a and 2a being mounted to the open ends of the sleeves.

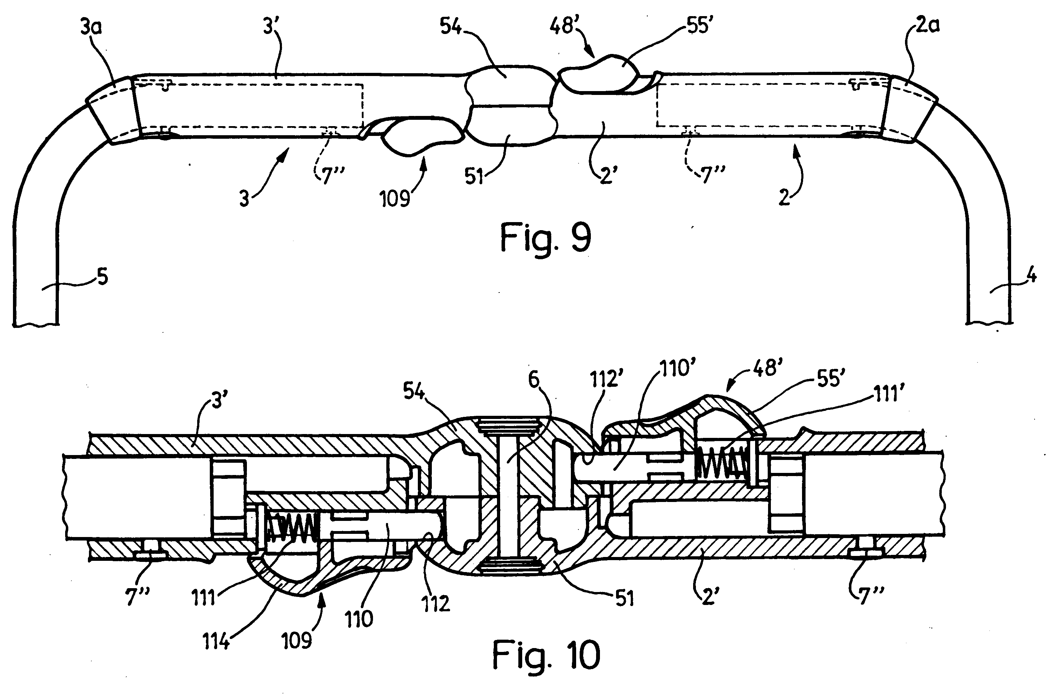

The joint at the handlebar pin 6 comprises a latch 48' locking the unfolded position thereof. This latch is mounted on the end of the sleeve 2' facing the joint 6 and comprises an external sliding control 55' having a bolt 110' (Figure 10) which is urged by a spring 111', said bolt being inserted in a bolt eye 112' provided on the disc-shaped widening 54 of the sleeve 3' where the pin 6 is located.

The unfolded position of the handlebar is also locked by the safety device 109.

When the latch 48' and the safety device 109 are operated in opposite directions, as shown by the arrows F and F', the widenings 54 and 51 are released from one another from the corresponding bolts 110' and 110, the handlebar being released and the two L-shaped handlebar members being able to rotate about the pin 6.

## Claims

**1.-** A device for locking and releasing the folded position of children's pushchairs, which folding is effected transversally and for which the intermediate U-shaped portion (1) of the handlebar is hinged and comprises a latch (118) locking it in the unfolded position thereof, characterized in that the handlebar is formed by two L-shaped members (2 and 3), the shorter arms of the L being hingedly connected together (6), forming the intermediate portion of the handlebar, while the longer arms of said L-shaped members form the side limbs (4 and 5) of the handlebar, with the peculiarity that said side limbs are formed by two mutually coaxially rotatable portions (4'), one of said side limbs (4 and 5) fixedly attached to the shorter arm, is provided with a spigot (105) on which the pushchair unfolding locking latch (56) is hooked, said latch being mounted on each front leg (8 and 9) of the pushchair and on which the corresponding handlebar side limb (4 and 5) may slide.

**2.-** The device for locking and releasing the folded position of children's pushchairs of claim 1, in which the hinged handlebar latch (48) comprises a pushbutton (55) for the release thereof, characterized in that the joint (6) in the position thereof corresponding to the unfolded handlebar, is locked by a safety device (109) resiliently urged (111) and having a control (114) for manual operation thereof allowing the joint (6) to be released.

**3.-** The device for locking and releasing the folded position of children's pushchairs of claim 1, in which with the mutual rotation of the shorter arms there is obtained the coaxial rotation of the portion of the side limbs (4 and 5) of the handlebar fixedly attached to said shorter arms and therewith the release of the spigots (105) of said side limbs from the retaining latches (56) mounted on the front legs (8 and 9), thereby allowing full folding of the pushchair.

**4.-** The device for locking and releasing the folded position of children's pushchairs of claim 2, in which the latch (48') and the safety device (109) provided on the handlebar are slidingly operated in opposite directions urged by respective springs (111' and 111) and have respective bolts (110' and 110) inserted in respective bolt eyes (112' and 112) corresponding to the jointed ends (54 and 51) of the centre division of the handlebar.
